# EUROPEAN PATENT SPECIFICATION

(11) **EP 3 173 450 B1**
(45) Date of publication and mention of the grant of the patent: **26.08.2020**
(21) Application number: 15824218.0
(22) Date of filing: 23.07.2015
(51) Int. Cl.: C09J 7/00, B32B 7/12, B32B 27/00, C09J 201/00, B32B 5/02, B32B 5/18, B32B 15/08, B32B 15/20, B32B 27/30, B32B 27/32, B32B 27/34, B32B 27/36, B32B 27/38, B32B 27/40, B32B 29/00

(54) **DOUBLE-SIDED ADHESIVE SHEET, JOINING METHOD USING DOUBLE-SIDED ADHESIVE SHEET, AND METHOD FOR PRODUCING DOUBLE-SIDED ADHESIVE SHEET**
DOPPELSEITIGE KLEBEFOLIE, VERBINDUNGSVERFAHREN UNTER VERWENDUNG DER DOPPELSEITIGEN KLEBEFOLIE UND VERFAHREN ZUR HERSTELLUNG DER DOPPELSEITIGEN KLEBEFOLIE
FEUILLE ADHÉSIVE DOUBLE FACE, PROCÉDÉ DE LIAISON METTANT EN OEUVRE CETTE FEUILLE, ET PROCÉDÉ DE FABRICATION DE CETTE FEUILLE

(30) Priority: 24.07.2014 JP 2014150990; 26.12.2014 JP 2014263858
(43) Date of publication of application: 31.05.2017
(73) Proprietor: Nissho Corporation, Osaka-shi, Osaka 530-0047 (JP); Nitto Denko Corporation, Ibaraki-shi, Osaka 567-8680 (JP)
(72) Inventor: NAKAHARA, Hiroki, Osaka-shi Osaka 530-0047 (JP); SOEDA, Yoshikazu, Ibaraki-shi Osaka 567-8680 (JP)
(74) Representative: Hoffmann Eitle
(86) International application number: PCT/JP2015/071039
(87) International publication number: WO 2016/013639

(56) References cited:
- WO-A1-2009/050782
- WO-A1-2014/073316
- JP-A- 2001 348 537
- JP-A- 2011 021 109
- JP-A- 2013 249 322
- US-A1- 2010 310 866
- US-A1- 2011 059 281
- US-A1- 2011 070 430

## Description

### Technical Field

The present invention relates to a double-sided adhesive sheet, a joining method using a double-sided adhesive sheet and a method for producing a double-sided adhesive sheet, and more specifically relates to a double-sided adhesive sheet for joining a second adherend to a first adherend, a method for joining the first adherend and the second adherend together with the double-sided adhesive sheet and a method for producing the double-sided adhesive sheet.

### Background Art

Conventionally, since double-sided adhesive sheets are excellent in handleability and adhesiveness as compared with liquid adhesives, they are widely used in the joining of structural members in various types of industrial products.

As such a double-sided adhesive sheet, for example, a double-sided adhesive tape is proposed in which adhesive layers are provided on both surfaces of a nonwoven fabric (for example, Patent Literature 1).

In such a double-sided adhesive tape, the adhesive layer on one surface of the nonwoven fabric is adhered to an adherend, thereafter an interior member is adhered to the adhesive layer on the other surface of the nonwoven fabric and thus the adherend and the interior member are joined together.

### Citation List

### Patent Literature

Patent Literature 1: Japanese unexamined patent application publication No. 2002-356660

### Summary of Invention

### Technical Problem

However, since with the double-sided adhesive tape of Patent Literature 1, the adhesive layers are provided on both surfaces of the nonwoven fabric, and flexibility is provided, the double-sided adhesive tape thus has a curved surface follow-up property, there is a disadvantage that, whereas when the double-sided adhesive tape is affixed to an adherend in a non-planar shape (three-dimensional shape) such as a curved surface, wrinkles occur easily.

Hence, when a double-sided adhesive tape is affixed to an adherend in a non-planar shape, for example, a plurality of double-sided adhesive tapes are combined and are then affixed to the adherend or the double-sided adhesive tape is processed by adding a cut to the double-sided adhesive tape so as to conform to the shape of the adherend.

However, even when the measures described above are performed, there is a limitation on the reduction of occurrence of wrinkles in the double-sided adhesive tape, and a space (gap) may be produced between the adherend and the double-sided adhesive tape or the double-sided adhesive tape may be separated from the adherend.

In order to affix a plurality of double-sided adhesive tapes to the adherend, it is necessary to perform the affixing operation a plurality of times, and in order to add the cut to the double-sided adhesive tape, it is necessary to cut part of the double-sided adhesive tape before the affixing operation. Therefore, the operation of affixing the double-sided adhesive tape to the adherend is complicated.

Hence, an object of the present invention is to provide a double-sided adhesive sheet with which an operation of affixing a double-sided adhesive tape to an adherend can be facilitated and with which at the same time, when an adhesive member is adhered to the adherend, the occurrence of wrinkles in the adhesive member can be reliably reduced, a joining method using a double-sided adhesive sheet and a method for producing a double-sided adhesive sheet.

### Solution to Problem

A double-sided adhesive sheet of the present invention includes an adhesive member which is kneaded with at least an adhesive agent, where the double-sided adhesive sheet is formed so as to have a non-planar shape.

In the configuration described above, since the double-sided adhesive sheet is previously formed so as to have the non-planar shape, an adhesive member can be affixed conforming to the non-planar shape of an adherend. The non-planar shape of the double-sided adhesive sheet is previously formed so as to conform to the non-planar shape of the adherend, and thus it is possible to reliably affix the adhesive member to the non-planar shape of the adherend.

Therefore, it is possible to reliably bring the adhesive member and the adherend into close contact with each other, with the result that it is possible to reliably reduce the occurrence of wrinkles in the adhesive member. Also, it is not necessary to affix a plurality of double-sided adhesive tapes to the adherend and to add a cut to a double-sided adhesive tape, with the result that it is possible to facilitate an operation of affixing the adhesive member to the adherend.

Therefore, even when the shape of the adherend is the non-planar shape (three-dimensional shape), while it is possible to facilitate the operation of affixing the adhesive member to the adherend, it is possible to reduce the occurrence of wrinkles in the adhesive member when the adhesive member is adhered to the adherend. Since a material having insulating property is kneaded, the double-sided adhesive tape can be used in an adherend which is required to have insulating performance and can thus be designed regardless of a conventional design method for separating members required to have an insulating property to provide insulation (space insulation). Consequently, it is possible to further reduce the size of the adherend.

On the other hand, the double-sided adhesive sheet of the present invention includes an adhesive member which is formed in the shape of a film and whose both surfaces in a thickness direction have an adhesive force and a pair of separation films which are arranged so as to sandwich the adhesive member in the thickness direction, where the double-sided adhesive sheet is formed so as to have the non-planar shape.

In the configuration described above, since the double-sided adhesive sheet is previously formed so as to have the non-planar shape, the separation film is separated, and thus the exposed adhesive member can be affixed conforming to the non-planar shape of the adherend. The non-planar shape of the double-sided adhesive sheet is previously formed so as to conform to the non-planar shape of the adherend, and thus it is possible to reliably affix the adhesive member to the non-planar shape of the adherend.

Therefore, it is possible to reliably bring the adhesive member and the adherend into close contact with each other, with the result that it is possible to reliably reduce the occurrence of wrinkles in the adhesive member. Also, it is not necessary to affix a plurality of double-sided adhesive tapes to the adherend and to add a cut to the double-sided adhesive tape, with the result that it is possible to facilitate the operation of affixing the adhesive member to the adherend.

Therefore, even when the shape of the adherend is the non-planar shape (three-dimensional shape), while it is possible to facilitate the operation of affixing the adhesive member to the adherend, it is possible to reduce the occurrence of wrinkles in the adhesive member when the adhesive member is adhered to the adherend.

Preferably, a separation force for separating, from the adhesive member, a separation film which is arranged on one surface of the adhesive member in the thickness direction differs from a separation force for separating, from the adhesive member, a separation film which is arranged on the other surface of the adhesive member in the thickness direction.

In the configuration described above, since the separation force of the separation film (hereinafter referred to as a first separation film) on the one surface in the thickness direction differs from the separation force of the separation film (hereinafter referred to as a second separation film) on the other surface in the thickness direction, it is possible to easily separate the separation film (the first separation film or the second separation film) which relatively has a small separation force.

Therefore, even when the double-sided adhesive sheet has the non-planar shape, in the operation of affixing the adhesive member, it is possible to easily expose the surface of the adhesive member, the surface of the adhesive member is affixed to the adherend and thus it is possible to reliably facilitate the operation of affixing the adhesive member to the adherend.

Preferably, each of the pair of separation films contains a thermoplastic polymer.

In the configuration described above, since the separation film contains the thermoplastic polymer, when the double-sided adhesive sheet is heated, the separation film is softened, with the result that the double-sided adhesive sheet is formed so as to have the non-planar shape. Thereafter, when the double-sided adhesive sheet is cooled, the separation film is hardened, with the result that the double-sided adhesive sheet reliably maintains the non-planar shape.

In other words, the double-sided adhesive sheet is heated and cooled, and thus it is possible to simply and reliably form the double-sided adhesive sheet.

In addition, preferably, the adhesive member includes a base member which is formed in the shape of a film and a pair of adhesive agent layers which are arranged so as to sandwich the base member in the thickness direction.

In the configuration described above, since the adhesive member includes the base member, even when the double-sided adhesive sheet has the non-planar shape, the base member can reliably hold the pair of adhesive agent layers. Therefore, even when an external force acts on the adhesive member in a state where the adhesive agent layer of the adhesive member is adhered to the adherend, the displacement of the adhesive agent layer can be reduced.

In addition, preferably, the adhesive member is made only of the adhesive agent layer which is formed in the shape of a film.

In the configuration described above, since the adhesive member is made only of the adhesive agent layer, it is possible to enhance the flexibility of the adhesive member, with the result that it is possible to reliably bring the adhesive member and the adherend into close contact with each other.

A joining method using a double-sided adhesive sheet according to the present invention includes a step of preparing a first adherend which has a non-planar shape, a step of preparing the double-sided adhesive sheet described above, the non-planar shape of the double-sided adhesive sheet conforming to the non-planar shape of the first adherend, a step of separating one separation film of the pair of separation films from the adhesive member and sticking the exposed adhesive member to the non-planar shape of the first adherend and a step of separating the other separation film of the pair of separation films from the adhesive member and affixing a second adherend to the exposed adhesive member.

In the configuration described above, since the non-planar shape of the double-sided adhesive sheet conforms to the non-planar shape of the first adherend, in the step of sticking the adhesive member to the non-planar shape of the first adherend, the adhesive member can be reliably stuck to the first adherend, with the result that it is possible to reliably reduce the occurrence of wrinkles in the adhesive member.

Then, the separation film is separated from the adhesive member which is adhered to the first adherend, and thereafter the second adherend is affixed to the exposed adhesive member, with the result that it is possible to reliably join the first adherend and the second adherend together.

A method for producing a double-sided adhesive sheet according to the present invention includes a step of preparing a processing sheet that includes: an adhesive member which is formed in the shape of a film and whose both surfaces in a thickness direction have an adhesive force; and a pair of separation films which are arranged so as to sandwich the adhesive member in the thickness direction, a step of forming a non-planar shape by heating and pressurizing at least part of the processing sheet and a step of cooling the processing sheet having the non-planar shape while maintaining a pressurized state.

In the configuration described above, the processing sheet is heated and pressurized so as to have the non-planar shape, and is thereafter cooled while the pressurized state is maintained, with the result that it is possible to reliably maintain the non-planar shape of the processing sheet.

In other words, the processing sheet is heated and cooled, and thus it is possible to reliably form the double-sided adhesive sheet. Thus, it is possible to reliably produce the double-sided adhesive sheet having the non-planar shape.

In addition, preferably, each of the pair of separation films contains a thermoplastic polymer, in the step of heating and pressurizing the processing sheet, the processing sheet is heated to a softening temperature or more of the thermoplastic polymer and in the step of cooling the processing sheet while maintaining the pressurized state, the processing sheet is cooled below the softening temperature of the thermoplastic polymer.

In the configuration described above, since the separation film contains the thermoplastic polymer, the processing sheet is heated to the softening temperature or more of the thermoplastic polymer, and thus the separation film is reliably softened and is formed so as to have the non-planar shape, and the processing sheet is cooled below the softening temperature of the thermoplastic polymer, and thus the separation film is reliably hardened so as to maintain the non-planar shape.

Therefore, the processing sheet can be reliably formed so as to have the non-planar shape, with the result that it is possible to more reliably produce the double-sided adhesive sheet having the non-planar shape.

### Advantageous Effects of Invention

In the double-sided adhesive sheet and the joining method using the double-sided adhesive sheet according to the present invention, while it is possible to facilitate the operation of affixing the double-sided adhesive tape to the adherend, it is possible to reduce the occurrence of wrinkles in the adhesive member when the adhesive member is adhered to the adherend. In the method for producing the double-sided adhesive sheet according to the present invention, it is possible to reliably produce the double-sided adhesive sheet described above.

### Brief Description of Drawings

[Fig. 1] Fig. 1A is a perspective view of a double-sided adhesive tape which is a first embodiment of the double-sided adhesive sheet of the present invention. Fig. 1B is a cross-sectional view taken along line A-A of the double-sided adhesive tape shown in Fig. 1A.

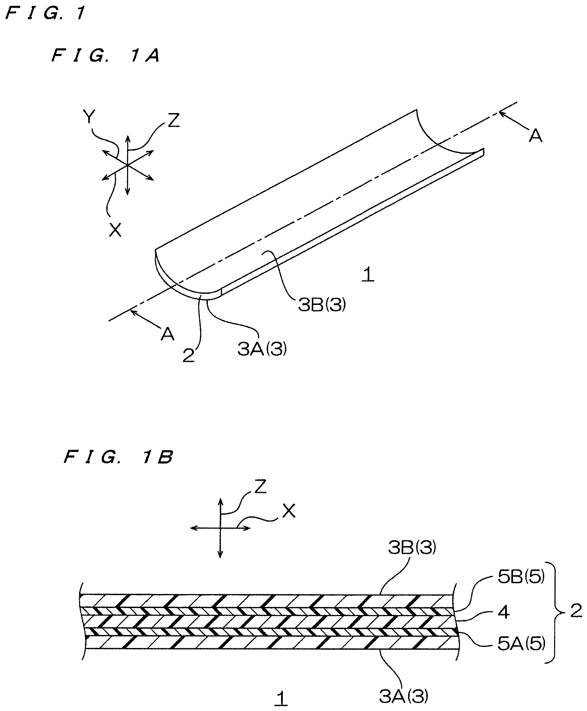

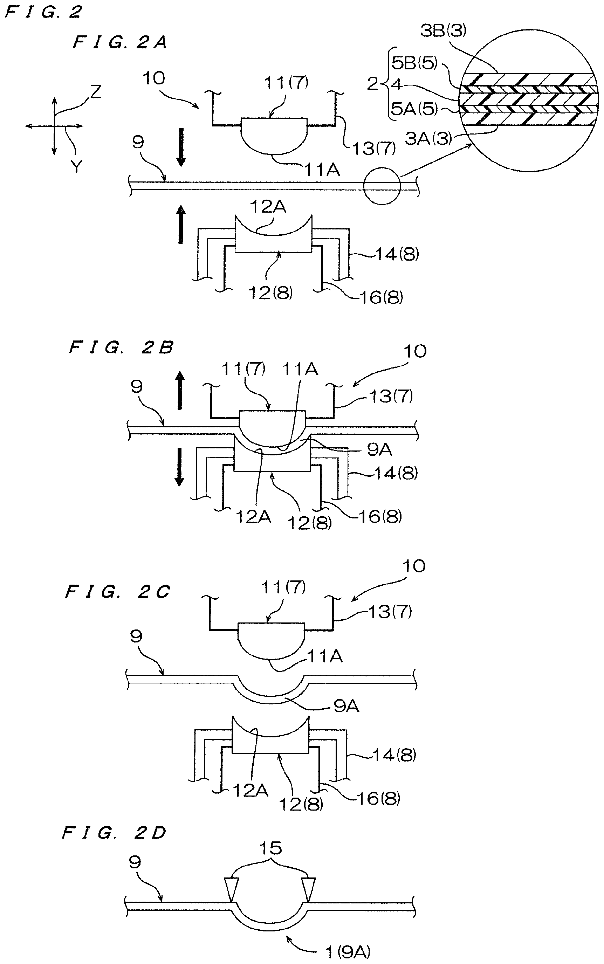

[Fig. 2] Fig. 2A is an illustrative diagram for illustrating a method for producing the double-sided adhesive tape shown in Fig. 1A and shows a state where a processing sheet is arranged a space apart between a first mold and a second mold. Fig. 2B is an illustrative diagram for illustrating the method for producing the double-sided adhesive tape after Fig. 2A and shows a state where the processing sheet is formed by being sandwiched between the first mold and the second mold. Fig. 2C is an illustrative diagram for illustrating the method for producing the double-sided adhesive tape after Fig. 2B and shows a state where the processing sheet is removed from the first mold and the second mold. Fig. 2D is an illustrative diagram for illustrating the method for producing the double-sided adhesive tape after Fig. 2C and shows a state where the double-sided adhesive tape is cut out of the processing sheet.

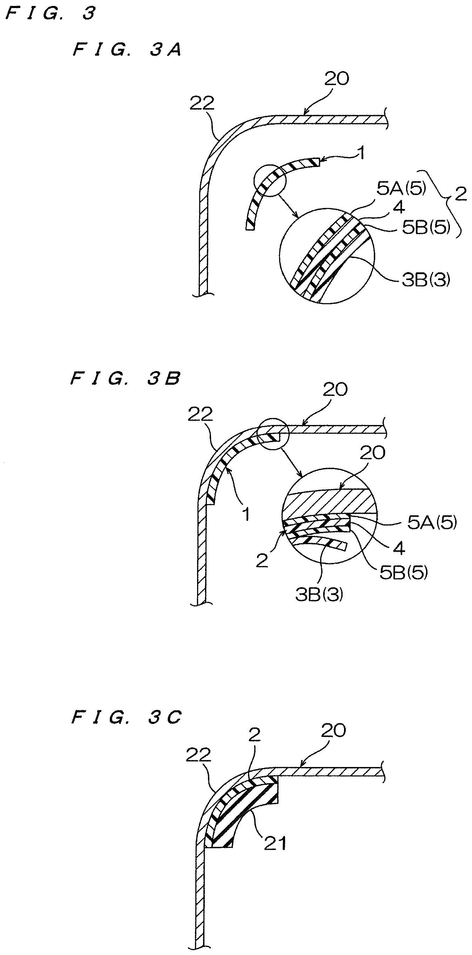

[Fig. 3] Fig. 3A is an illustrative diagram for illustrating the joining of an installation target and a component with the double-sided adhesive tape shown in Fig. 1A and shows a state where a first separation film is removed from the double-sided adhesive tape. Fig. 3B is an illustrative diagram for illustrating the joining of the installation target and the component with the double-sided adhesive tape after Fig. 3A and shows a state where a first adhesive agent layer is adhered to the curved portion of the installation target. Fig. 3C is an illustrative diagram for illustrating the joining of the installation target and the component with the double-sided adhesive tape after Fig. 3B and shows a state where the component is joined via an adhesive member to the curved portion.
[Fig. 4] Fig. 4 is a cross-sectional view of a double-sided adhesive tape which is a second embodiment of the present invention.
[Fig. 5] Fig. 5A is a perspective view of a double-sided adhesive tape which is a third embodiment of the present invention. Fig. 5B is a perspective view of a double-sided adhesive tape which is a fourth embodiment of the present invention.
[Fig. 6] Fig. 6 is a cross-sectional view of a double-sided adhesive tape which is a fifth embodiment of the present invention.

### Description of Embodiments

### 1. Configuration of double-sided adhesive tape

As shown in Fig. 1A, a double-sided adhesive tape 1 which is an example of a double-sided adhesive sheet is formed so as to have a non-planar shape.

The non-planar shape refers to a shape in which in a Z direction perpendicular to an XY plane including an X direction that is a predetermined direction and a Y direction perpendicular to the X direction, a recess or a projection is provided. In other words, when the double-sided adhesive tape 1 is placed on a horizontal plane, the double-sided adhesive tape 1 has a recess or a projection in an up/down direction.

In addition, in the double-sided adhesive tape 1, the entire double-sided adhesive tape 1 may be formed in the non-planar shape or only part thereof may be formed in the non-planar shape.

In a first embodiment, in the double-sided adhesive tape 1, the entire double-sided adhesive tape 1 is formed in the non-planar shape and is formed in the shape of a curve which is projected or recessed in the Z direction. It is to be noted that the following description, when directions are mentioned, it is assumed that the X direction is a left/right direction X, the Y direction is a front/back direction Y and the Z direction is an up/down direction Z, and specifically, directions are with reference to the directions of arrows indicated in drawings.

More specifically, when the double-sided adhesive tape 1 is seen in the left/right direction X, the double-sided adhesive tape 1 is formed in the shape of the curve which is projected downward and has a film shape (thin plate shape) which extends in the left/right direction X. As shown in Fig. 1B, the double-sided adhesive tape 1 includes an adhesive member 2 and a pair of separation films 3.

The adhesive member 2 is a substantially center portion of the double-sided adhesive tape 1 in a thickness direction of the double-sided adhesive tape 1, and includes, as an example of a base member, a support layer 4 and a pair of adhesive agent layers 5.

The support layer 4 is formed in a film shape (thin plate shape), is hard or flexible at room temperature (equal to or more than 5°C but equal to or less than 35°C), and preferably has flexibility. Examples of the support layer 4 include a plastic film, a foam base member, paper, cloth, nonwoven fabric and metal foil.

Examples of the plastic film include polyolefin films (such as polyethylene, polypropylene, poly-1-butene and poly-4-methyl-1-pentene), ethylene-based copolymer films (such as an ethylene-propylene copolymer, an ethylene-1-butene copolymer, an ethylene-vinyl alcohol copolymer, an ethylene-vinyl acetate copolymer and an ethylene-ethyl acrylate copolymer), polyester films (such as polyethylene terephthalate, polyethylene naphthalate and polybutylene terephthalate), a polyacrylate film, a polystyrene film, polyamide films (such as nylon 6, nylon 6,6, and partially aromatic polyamide), a polyvinyl chloride film, polyvinylidene chloride film and a polycarbonate film.

Examples of the foam base member include a polyurethane foam and a polyethylene foam. Examples of the paper include kraft paper, crepe paper, Japanese paper and insulating paper. Examples of the cloth include cotton cloth and staple fiber cloth. Examples of the nonwoven fabric include a polyester nonwoven fabric, a vinylon nonwoven fabric and an aramid fiber nonwoven fabric. Examples of the metal foil include aluminum foil and copper foil.

Although the support layer 4 described above can be selected as appropriate according to the application of the double-sided adhesive tape 1, the plastic film and the nonwoven fabric are preferably selected, the polyester film is more preferably selected and the polyethylene terephthalate film is particularly preferably selected.

The thickness of the support layer 4 is, for example, equal to or more than 0.5 µm, preferably equal to or more than 10 µm and more preferably equal to or more than 20 µm but is, for example, equal to or less than 200 µm, preferably equal to or less than 150 µm and more preferably equal to or less than 100 µm.

The pair of adhesive agent layers 5 are both end portions in the thickness direction of the adhesive member 2, and are arranged so as to sandwich the support layer 4 from the outside in the thickness direction. In this way, both surfaces of the adhesive member 2 in the thickness direction have an adhesive force. The pair of adhesive agent layers 5 are distinguished such that the adhesive agent layer 5 on one side (lower side) in the thickness direction is a first adhesive agent layer 5A and that the adhesive agent layer 5 on the other side (upper side) in the thickness direction is a second adhesive agent layer 5B.

The adhesive agent layer 5 is stacked in layers on the surface of the support layer 4, and has flexibility at room temperature (equal to or more than 5°C but equal to or less than 35°C). The adhesive agent layer 5 is formed of an adhesive agent.

The adhesive agent forming the adhesive agent layer 5 is not particularly limited, and examples thereof include known adhesive agents such as acrylic-based adhesives, rubber-based adhesives (such as natural rubber-based adhesives and synthetic rubber-based adhesives), silicone-based adhesives, polyester-based adhesives, urethane-based adhesives, polyamide-based adhesives, epoxy-based adhesives, vinyl alkyl ether-based adhesives, fluorine-based adhesives and thermoplastic adhesives.

The forms of these adhesive agents are not particularly limited, and for example, various types of forms such as emulsion-based adhesives, solvent-based adhesives, thermoplastic adhesives such as a hot melt-type adhesive, oligomer-based adhesives and solid adhesives can be adopted.

These adhesive agents may be used singly or two or more types thereof can be used together.

Among these adhesive agents, acrylic-based adhesives are preferably adopted, and acrylic-based adhesives having 2 to 8 carbon atoms (such as butyl acrylate) are more preferably adopted, as they are easily formed into a non-planar shape.

The glass transition temperature (Tg) of the adhesive agents described above is, for example, equal to or more than -70°C and preferably equal to or more than -50°C but is, for example, equal to or less than 30°C and preferably less than 5°C. It is to be noted that the glass transition temperature (Tg) is defined as the peak of a loss shear elastic modulus G" which is measured with a dynamic viscoelasticity measuring device (measurement conditions: shear mode, temperature increasing rate of 5°C/minute and frequency of 1 Hz).

When the glass transition temperature (Tg) of the adhesive agent is equal to or more than the lower limit value described above, it is possible to easily perform material design whereas when the glass transition temperature (Tg) of the adhesive agent is equal to or less than the upper limit value described above, it is possible to reliably bring the adhesive agent layer 5 into a rubbery state at room temperature, and it is possible to reliably make the adhesive agent layer 5 follow the shape of the separation films 3.

The thickness of the adhesive agent layer 5 described above is, for example, equal to or more than 3 µm, preferably equal to or more than 5 µm and more preferably equal to or more than 10 µm but is, for example, equal to or less than 300 µm, preferably equal to or less than 200 µm and more preferably equal to or less than 100 µm.

In addition, the thickness of the adhesive agent layer 5 is, for example, equal to or more than 50% and preferably equal to or more than 200% of the thickness of the support layer 4 but is, for example, equal to or less than 2000% and preferably equal to or less than 1000% thereof.

The thicknesses of the pair of adhesive agent layers 5 (the first adhesive agent layer 5A and the second adhesive agent layer 5B) may be the same as each other or may differ from each other.

The adhesive agent layer 5 described above may be constituted of a single layer or multiple layers (multilayer member).

In addition, the adhesive agent layer 5 may be provided on the support layer 4 via another layer (lower layer). Examples of such another layer (lower layer) include an intermediate layer, a undercoat layer and a base member layer (particularly such as a film layer or a nonwoven fabric layer).

The adhesive force of the adhesive agent layer 5 is, for example, equal to or more than 5N/20 mm and preferably equal to or more than 10N/20 mm but is, for example, equal to or less than 100N/20 mm and preferably equal to or less than 70N/20 mm. It is to be noted that the adhesive force can be measured with an adhesive force measurement test which will be described below.

### Adhesive force measurement test:

An adhesive member is cut into a size having a width of 20 mm and a length of 100 mm, a backing PET film (which has a thickness of 25 µm) is affixed to one of the adhesive agent layers and thus a measurement sample is produced. Next, the adhesive surface of the adhesive agent layer in which an adhesive force is measured is press-fitted to an adherend (stainless steel plate (SUS304BA plate)) with a 2 kg roller in one round trip, and the measurement sample is left for 30 minutes under an environment of 23°C × 50%RH. After being left, the measurement sample is separated with a universal tensile and compression testing machine (device name "Tensile and Compression Testing Machine TG-1kN" made by Minebea Co., Ltd.) at a tensile rate of 300 mm/min at a separation angle of 180° and thus an adhesive force is measured. It is to be noted that the measurement is performed under an environment of 23°C × 50%RH.

Although the adhesive forces of the pair of adhesive agent layers 5 (the first adhesive agent layer 5A and the second adhesive agent layer 5B) may be the same as each other, they may differ from each other in terms of adjustment of the separation force of a separation film which will be described later.

In order to make the adhesive force of the first adhesive agent layer 5A differ from the adhesive force of the second adhesive agent layer 5B, for example, the first adhesive agent layer 5A and the second adhesive agent layer 5B are respectively formed with different adhesive agents.

In other words, the pair of adhesive agent layers 5 (the first adhesive agent layer 5A and the second adhesive agent layer 5B) may be respectively formed with the same adhesive agent or may be respectively formed with different adhesive agents.

The pair of separation films 3 are both end portions in the thickness direction of the double-sided adhesive tape 1, and are arranged so as to sandwich the adhesive member 2 from the outside in the thickness direction of the double-sided adhesive tape 1. It is to be noted that the pair of separation films 3 are distinguished such that the separation film 3 on one side (lower side) in the thickness direction is a first separation film 3A and that the separation film 3 on the other side (upper side) in the thickness direction is a second separation film 3B.

In other words, the first separation film 3A is adhered to the lower surface (convex surface) of the first adhesive agent layer 5A, and the second separation film 3B is adhered to the upper surface (concave surface) of the second adhesive agent layer 5B.

Each of the pair of separation films 3 is formed in a hard film shape (thin plate shape) at room temperature (equal to or more than 5°C but equal to or less than 35°C), is, as shown in Figs. 1A and 1B, formed in the shape of a curve which is projected downward when seen in the left/right direction X and is formed in a film shape (thin plate shape) which extends in the left/right direction X.

Examples of the separation film 3 include paper, nonwoven fabric (such as an aramid fiber nonwoven fabric) and a resin film. Among the separation films 3 described above, in terms of three-dimensional processing, the resin film is preferable.

The resin film is made of thermoplastic polymer, and examples thereof include polyolefin films (such as polyethylene, polypropylene, polybutene, polybutadiene and polymethylpentene), an ethylene-vinyl acetate copolymer film, a polyvinyl chloride film, a vinyl chloride copolymer film, polyester films (such as polyethylene terephthalate and polybutylene terephthalate) and a polyurethane film.

Among the resin films described above, a polyolefin film and a polyester film are preferable, and a polyethylene film and a polyethylene terephthalate film are more preferable.

The thickness of the separation film 3 is, for example, equal to or more than 5 µm, preferably equal to or more than 10 µm and more preferably equal to or more than 15 µm but is, for example, equal to or less than 200 µm, preferably equal to or less than 100 µm and more preferably equal to or less than 50 µm.

When the thickness of the separation film 3 falls within the above range (equal to or more than the lower limit value but equal to or less than the upper limit value), the non-planar shape (three-dimensional shape) of the double-sided adhesive tape 1 is easily maintained, and it is also possible to enhance the operability of the separation operation from the adhesive agent layer 5.

In addition, the thickness of the separation film 3 is, for example, equal to or more than 50% and preferably equal to or more than 100% of the thickness of the adhesive agent layer 5 (the first adhesive agent layer 5A) but is, for example, equal to or less than 1000% and preferably equal to or less than 500% thereof. In other words, the separation film 3 is preferably thicker than the adhesive agent layer 5.

In addition, the thicknesses of the pair of separation films 3 (the first separation film 3A and the second separation film 3B) may be the same as each other or may differ from each other.

On the separation film 3, as necessary, various types of treatment such as mold release and antifouling treatment and antistatic treatment are performed.

As a method for performing the mold release and antifouling treatment, for example, a method for treating the surface of the separation film 3 with an organic-based mold release agent (such as a silicone-based, fluorine-based long-chain alkyl-based or fatty acid-based amide-based mold release agent) or an inorganic-based mold release agent (such as silica powder) is present. By such treatment, on the surface of the separation film 3, a separation treatment layer is provided.

As a method for performing the antistatic treatment, for example, a method for coating the surface of the separation film 3 with an antistatic agent (such as a quaternary ammonium salt), a method for depositing an antistatic agent on the surface of the separation film 3 and a method for kneading the separation film 3 with an antistatic agent are present.

The pair of separation films 3 (the first separation film 3A and the second separation film 3B) may be the same as each other or may differ from each other.

The shapes of the pair of separation films 3 (the first separation film 3A and the second separation film 3B) are preferably the same as each other. Specifically, the respective cross-sectional shapes of the first separation film 3A and the second separation film 3B when they are cut in the up/down direction Z and the left/right direction X are substantially the same as each other.

For example, at a tensile rate of 300 mm/min at a separation angle of 180°, the separation force (23°C, 50%RH) for separating the separation film 3 from the adhesive agent layer 5 is, for example, equal to or more than 0.01 (N/50 mm) and preferably equal to or more than 0.1 (N/50 mm) but is, for example, equal to or less than 2 (N/50 mm) and preferably equal to or less than 1 (N/50 mm).

Although in the double-sided adhesive tape 1, the separation force for separating the first separation film 3A from the lower surface (convex surface) of the first adhesive agent layer 5A may be the same as the separation force for separating the second separation film 3B from the upper surface (convex surface) of the second adhesive agent layer 5B, they preferably differ from each other.

More specifically, in a joining operation which will be described later, the separation force for separating, from the convex surface of the first adhesive agent layer 5A, the first separation film 3A which is separated before the second separation film 3B is lower than the separation force for separating the second separation film 3B from the concave surface of the second adhesive agent layer 5B.

It is to be noted that, in the joining operation which will be described later, the convex surface of the first adhesive agent layer 5A is adhered to the inner surface of a curved portion 22 of an installation target 20, thereafter the second separation film 3B is separated and a component 21 is adhered to the concave surface of the second adhesive agent layer 5B.

At a tensile rate of 300 mm/min at a separation angle of 180°, the separation force (23°C, 50%RH) for separating the first separation film 3A from the first adhesive agent layer 5A is, for example, equal to or more than 0.01 (N/50 mm) and preferably equal to or more than 0.1 (N/50 mm) but is, for example, equal to or less than 0.7 (N/50 mm) and preferably equal to or less than 0.4 (N/50 mm).

At a tensile rate of 300 mm/min at a separation angle of 180°, the separation force (23°C, 50%RH) for separating the second separation film 3B from the second adhesive agent layer 5B is, for example, equal to or more than 0.1 (N/50 mm) and preferably equal to or more than 0.2 (N/50 mm) but is, for example, equal to or less than 0.1 (N/50 mm) and preferably equal to or less than 0.7 (N/50 mm).

The separation force for separating the second separation film 3B from the second adhesive agent layer 5B is, for example, equal to or more than 100% and preferably equal to or more than 200% of the separation force for separating the first separation film 3A from the first adhesive agent layer 5A but is, for example, equal to or less than 1000% and preferably equal to or less than 500% thereof.

Thus, it is possible to easily separate the first separation film 3A from the first adhesive agent layer 5A, and in the joining operation which will be described later, it is possible to easily stick the first adhesive agent layer 5A to the curved portion 22 of the installation target 20. Therefore, it is possible to facilitate the operation of joining the installation target 20 and the component 21 together.

Examples of the above-described method for making the separation force of the first separation film 3A and the separation force of the second separation film 3B differ from each other include a method for respectively forming the first adhesive agent layer 5A and the second adhesive agent layer 5B with different adhesive agents, a method for respectively treating the inner surfaces of the first separation film 3A and the second separation film 3B in the thickness direction with different mold release agents, a method for making one separation film 3 (the first separation film 3A or the second separation film 3B) of a separation film in which mold release treatment is performed on a resin film and making the other separation film 3 of a polyolefin film in which mold release treatment is not performed and a method for using resin films having different thicknesses as the pair of separation films 3.

In other words, the first adhesive agent layer 5A and the second adhesive agent layer 5B are respectively formed with different adhesive agents, and thus the adhesive forces of the first adhesive agent layer 5A and the second adhesive agent layer 5B can be made to differ from each other, with the result that the separation forces of the first separation film 3A and the second separation film 3B can be made to differ from each other.

In addition, even when the respective adhesive forces of the first adhesive agent layer 5A and the second adhesive agent layer 5B are the same as each other, the respective inner surfaces of the first separation film 3A and the second separation film 3B in the thickness direction are respectively treated with different mold release agents, with the result that the respective separation forces of the first separation film 3A and the second separation film 3B can be made to differ from each other.

### 2. Method for producing double-sided adhesive tape

A method for producing the double-sided adhesive tape 1 will then be described.

In order to produce the double-sided adhesive tape 1 described above, as shown in Figs. 2A to 2D, a processing sheet 9 is first prepared (preparation step).

As shown in Fig. 2A, the processing sheet 9 includes the adhesive member 2 which has an adhesive force on both surfaces in the thickness direction and a pair of separation films 3 which are arranged so as to sandwich the adhesive member 2, and is formed in the shape of a film which is substantially flat plate. In order to prepare such a processing sheet 9, for example, both surfaces of the support layer 4 are coated with the adhesive agent layer 5 (the first adhesive agent layer 5A and the second adhesive agent layer 5B) by a known coating method (for example, coating with a known coater).

Thereafter, the pair of separation films 3 are stuck to the pair of adhesive agent layers 5, respectively. In this way, the processing sheet 9 is prepared (set up).

Although such a processing sheet 9 is not particularly limited as long as having the size which, at least one double-sided adhesive tape 1 can be cut out, in terms of the production cost, the processing sheet 9 is preferably formed in a shape which is continuous in the front/back direction Y such that a plurality of double-sided adhesive tapes 1 can be cut out.

Next, as shown in Figs. 2B and 2C, part of the processing sheet 9 is formed in a non-planar shape (heating step), and thereafter the non-planar shaped part of the processing sheet 9 is cooled (cooling step). In this way, the processing sheet 9 is formed so as to have the non-planar shape. It is to be noted that the forming refers to the provision of a shape to a member.

The heating step and the cooling step described above are performed with, for example, a forming device 10.

The forming device 10 includes a first mold unit 7, a second mold unit 8 and an unillustrated control portion.

The first mold unit 7 includes a first mold 11, an unillustrated heater and a wiring 13.

The first mold 11 has a prismatic shape which extends in the left/right direction X, and the lower surface of the first mold 11 is formed as a convex portion 11A. The convex portion 11A corresponds to the inner surface of the curved portion 22 of the installation target 20 which will be described later, and is formed substantially in the shape of an arc in side view which is bulged downward when seen in the left/right direction X.

The unillustrated heater is embedded within the first mold 11. The wiring 13 electrically connects the unillustrated heater and an unillustrated power supply.

The first mold unit 7 is configured such that power is supplied to the unillustrated heater via the wiring 13, and thus the unillustrated heater heats the first mold 11. In addition, the first mold unit 7 is configured such that the first mold 11 can be moved in the up/down direction.

The second mold unit 8 is arranged a distance apart downward with respect to the first mold unit 7. The second mold unit 8 includes a second mold 12, a cooling pipe 14 and an unillustrated heater and a wiring 16.

The second mold 12 has a prismatic shape which extends in the left/right direction X, and the upper surface of the second mold 12 is formed as a concave portion 12A. The concave portion 12A corresponds to the convex portion 11A of the first mold 11, and has substantially the same shape as the inner surface of the curved portion 22 of the installation target 20 which will be described later. Specifically, the concave portion 12A is formed substantially in the shape of an arc in side view which is recessed downward when seen in the left/right direction X.

The cooling pipe 14 is provided so as to pass the second mold 12, and is configured such that a cooling medium such as cooling water flows therethrough.

The unillustrated heater is embedded within the second mold 12. The wiring 16 electrically connects the unillustrated heater and an unillustrated power supply.

The second mold unit 8 is configured such that power is supplied to the second mold 12 via the wiring 16, and thus the unillustrated heater heats the second mold 12, and that the cooling medium flows through the cooling pipe 14, and thus the second mold 12 is cooled. In addition, the second mold unit 8 is configured such that the second mold 12 can be moved in the up/down direction.

The unillustrated control portion is electrically connected to the first mold unit 7 and the second mold unit 8, respectively, and is configured to control the operations of the first mold unit 7 and the second mold unit 8. The unillustrated control portion is constituted of a microcomputer which includes a CPU, a ROM and a RAM.

The forming device 10 described above first performs the heating step as shown in Fig. 2A.

In the heating step, the processing sheet 9 is arranged along the front/back direction Y between the first mold 11 and the second mold 12 in the up/down direction Z.

Next, the first mold 11 and the second mold 12 are respectively heated to a 24 first heating temperature by control with the unillustrated control portion.

The first heating temperature is not particularly limited as long as the first heating temperature is equal to or more than a temperature at which the processing sheet 9 is deformed but equal to or less than the heat resistance temperature, and is, for example, equal to or more than 80°C and preferably equal to or more than 100°C but is, for example, equal to or less than 220°C and preferably equal to or less than 200°C.

When the first heating temperature is equal to or more than the lower limit value described above, it is possible to reliably deform the separation film 3 of the double-sided adhesive tape 1 whereas when the first heating temperature is equal to or less than the upper limit value described above, it is possible to reduce the degradation of the adhesive agent layer 5 in the double-sided adhesive tape 1.

In addition, when the separation film 3 is a resin film which is made of a thermoplastic polymer, the first heating temperature is preferably equal to or more than the softening temperature of the thermoplastic polymer (separation film 3). It is to be noted that the softening temperature of the separation film 3 has the same meaning as the glass transition temperature (Tg) of the separation film 3. That is, the first heating temperature is preferably equal to or more than the glass transition temperature of the thermoplastic polymer (separation film 3).

In addition, the first heating temperature of the first mold 11 and the first heating temperature of the second mold 12 may be the same as each other or may differ from each other.

Next, when the respective temperatures of the first mold 11 and the second mold 12 reach the first heating temperature, the unillustrated control portion moves the first mold 11 downward and moves the second mold 12 upward.

Then, the processing sheet 9 is sandwiched between the convex portion 11A of the first mold 11 and the concave portion 12A of the second mold 12 and is thereby pressurized.

Here, as the condition of the pressurization of the processing sheet 9, each of the pressures from the upper and lower sides of the processing sheet 9 is, for example, equal to or more than 1 MPa and preferably equal to or more than 5 MPa but is, for example, equal to or less than 1000 MPa and preferably equal to or less than 800 MPa.

When the condition of the pressurization of the processing sheet 9 is equal to or more than the lower limit value described above, it is possible to reliably form the processing sheet 9 in the non-planar shape whereas when the condition of the pressurization of the processing sheet 9 is equal to or less than the upper limit value described above, it is possible to reduce the excessive extension of the processing sheet 9.

It is to be noted that the first mold 11 and the second mold 12 are respectively maintained at the first heating temperature even when the processing sheet 9 is sandwiched therebetween.

The first mold 11 and the second mold 12 heat and pressurize the processing sheet 9 for a predetermined period of time.

The predetermined period of time is, for example, equal to or more than 0.5 seconds and preferably equal to or more than 1 second but is, for example, equal to or less than 60 seconds and preferably equal to or less than 40 seconds.

In addition, within the predetermined period of time, the first mold 11 and the second mold 12 are respectively heated from the first heating temperature to the second heating temperature as necessary.

The second heating temperature is higher than the first heating temperature, and is, for example, equal to or more than 90°C and preferably equal to or more than 110°C but is, for example, equal to or less than 200°C and preferably equal to or less than 180°C.

Thus, in the processing sheet 9, the portion sandwiched between the first mold 11 and the second mold 12 is deformed into the non-planar shape and is specifically deformed into the shape of a curve conforming to the convex portion 11A and the concave portion 12A. In the following description, the portion sandwiched between the first mold 11 and the second mold 12 is referred to as a curve shaped portion 9A.

The radius of curvature of the curve shaped portion 9A is, for example, equal to or more than 1 cm and preferably equal to or more than 5 cm but is, for example, equal to or less than 20 cm and preferably equal to or less than 10 cm.

When in the heating step, the separation film 3 is a resin film, the support layer 4 is a plastic film and the adhesive agent layer 5 is an acrylic-based adhesive agent, the separation film 3 and the support layer 4 and the adhesive agent layer 5 are brought into a rubbery state.

Next, when the predetermined period of time has elapsed, the forming device 10 completes the heating step and performs the cooling step.

In the cooling step, the unillustrated control portion stops the heating of the first mold 11 and the second mold 12 while maintaining the state where the curve shaped portion 9A of the processing sheet 9 is sandwiched between the first mold 11 and the second mold 12, and passes the cooling medium (for example, cooling water) through the cooling pipe 14.

Then, the second mold 12 is cooled so as to reach a cooling temperature, and is maintained for a predetermined period of time (cooling step).

The cooling temperature is, for example, equal to or more than 3°C and preferably equal to or more than 5°C but is, for example, equal to or less than 80°C and preferably equal to or less than 70°C.

In addition, when the separation film 3 is a resin film which is made of a thermoplastic polymer, the cooling temperature is preferably less than the softening temperature of the thermoplastic polymer (separation film 3). That is, the cooling temperature is preferably less than the glass transition temperature of the thermoplastic polymer (separation film 3).

The predetermined period of time is, for example, equal to or more than 0.5 seconds and preferably equal to or more than 1 second but is, for example, equal to or less than 60 seconds and preferably equal to or less than 40 seconds.

In this way, the curve shaped portion 9A of the processing sheet 9 is cooled while the state where the curve shaped portion 9A is pressurized by the first mold 11 and the second mold 12 is maintained.

Here, when the separation film 3 is a resin film, the support layer 4 is a plastic film and the adhesive agent layer 5 is an acrylic-based adhesive agent, while the support layer 4 and the adhesive agent layer 5 respectively maintain the rubbery state, and the separation film 3 is brought into a glass state to support the support layer 4 and the adhesive agent layer 5.

Next, as shown in Fig. 2C, the unillustrated control portion moves the first mold 11 upward and moves the second mold 12 downward. Thus, the pressurization (press) of the curve shaped portion 9A of the processing sheet 9 is released, and thus the processing sheet 9 having the curve shaped portion 9A is taken out of the forming device 10.

Thereafter, as necessary, as shown in Fig. 2D, an unnecessary part is cut from the processing sheet 9, and thus the double-sided adhesive tape 1 is cut out (cutting step).

Examples of a method for cutting the double-sided adhesive tape 1 out of the processing sheet 9 include known processing methods such as cutting and punching. In Fig. 2D, the processing sheet 9 is cut with a cutter 15, and thus only the curve shaped portion 9A of the processing sheet 9 is cut out as the double-sided adhesive tape 1.

As above, the double-sided adhesive tape 1 is prepared. The double-sided adhesive tape 1 has the same non-planar shape as the inner surface of the curved portion 22 which will be described later.

It is to be noted that, when the double-sided adhesive tape 1 is continuously produced, as described above, the part of the processing sheet 9 is formed into the curve shaped portion 9A, and thereafter the processing sheet 9 is moved in the front/back direction Y. Then, the other part of the processing sheet 9 is formed in the shape of a curve as in the above. Thereafter, each of a plurality of double-sided adhesive tapes 1 (the curve shaped portions) are cut out of the processing sheet 9.

### 3. Joining of installation target and component with double-sided adhesive tape

The joining of the installation target 20 serving as an example of a first adherend and the component 21 serving as an example of a second adherend with the double-sided adhesive tape 1 will then be described with reference to Figs. 3A to 3C.

In order to join the installation target 20 and the component 21 with the double-sided adhesive tape 1, the installation target 20 is first prepared.

The installation target 20 is not particularly limited as long as the installation target 20 has a non-planar shape, examples thereof include the substrates of electrical and electronic products, the bodies of automobiles and the walls and ceilings of structures and examples of the material thereof include a steel plate, a resin member and wood.

In the first embodiment, the installation target 20 is a steel plate which is included in the body of an automobile and which is formed in the shape of the letter L, and the steel plate is chamfered such that a bent portion thereof is the curved portion 22 serving as an example of the non-planar shape. The curved portion 22 is formed in the shape of an arc.

Next, the double-sided adhesive tape 1 is prepared. Here, the curve shape of the double-sided adhesive tape 1 which is specifically the convex surface of the first adhesive agent layer 5A conforms to the inner surface (inner side surface in a radial direction) of the curved portion 22 of the installation target 20.

Next, the first separation film 3A is separated from the adhesive member 2, and thus the convex surface of the first adhesive agent layer 5A is exposed. Since in this state, the adhesive member 2 is supported by the second separation film 3B, the adhesive member 2 maintains the curve shape.

Thereafter, as shown in Fig. 3B, the adhesive member 2 is stuck to the curved portion 22 of the installation target 20 such that the convex surface of the first adhesive agent layer 5A is brought into close contact with the inner surface of the curved portion 22.

Next, the second separation film 3B is separated from the double-sided adhesive tape 1 (the adhesive member 2), and thus the second adhesive agent layer 5B is exposed. Then, the component 21 is affixed to the second adhesive agent layer 5B.

The component 21 is not particularly limited, and examples thereof include electrical and electronic components, automobile interior components, automobile exterior components and residential interior components. In the first embodiment, the component 21 is an automobile interior component which is made of a foam member.

As above, the joining of the installation target 20 and the component 21 with the double-sided adhesive tape 1 is completed.

As shown in Figs. 1A and 1B, the double-sided adhesive tape 1 is previously formed so as to have the non-planar shape. Therefore, as shown in Figs. 3A and 3B, the adhesive member 2 exposed by the separation of the separation film 3 can be affixed conforming to the non-planar shape (the curved portion 22) of the installation target 20. The non-planar shape of the double-sided adhesive tape 1 is previously formed so as to conform to the curved portion 22 of the installation target 20, and thus the adhesive member 2 can be reliably affixed to the curved portion 22.

Therefore, even when the shape of the installation target 20 is the non-planar shape, it is possible to reliably bring the adhesive member 2 and the installation target 20 into close contact with each other, with the result that it is possible to reliably reduce the occurrence of wrinkles in the adhesive member 2.

Consequently, while it is possible to facilitate the operation of affixing the adhesive member 2 to the installation target 20, when the adhesive member 2 is adhered to the installation target 20, it is possible to reduce the occurrence of wrinkles in the adhesive member 2.

In addition, since the non-planar shape of the double-sided adhesive tape 1 corresponds to the non-planar shape of the installation target 20, even when the shape of the installation target 20 is complicated, the adhesive member 2 can be reliably affixed to the installation target 20, with the result that it is possible to enhance the accuracy of the positioning of the adhesive member 2 with respect to the installation target 20.

However, when the double-sided adhesive tape 1 is used for joining an interior component, as compared with a case where the double-sided adhesive tape 1 is used for joining an exterior component, it is difficult to secure a large operation space. Even in such a case, since the non-planar shape of the double-sided adhesive tape 1 corresponds to the non-planar shape of the installation target 20, it is possible to reliably affix the adhesive member 2 and the installation target 20, with the result that it is possible to reliably join the installation target 20 and the component 21 together.

In addition, as compared with a case where a cut is added to the double-sided adhesive tape 1, it is possible to secure a large area of the adhesive member 2 which is stuck to the installation target 20, and thus it is possible to reliably reduce the space (gap) and the separation of the adhesive member 2.

In addition, as shown in Figs. 3A to 3C, the separation force for separating the first separation film 3A from the adhesive member 2 and the separation force for separating the second separation film 3B from the adhesive member 2 differ from each other. More specifically, the separation force of the first separation film 3A is lower than the separation force of the second separation film 3B. Therefore, it is possible to easily separate the first separation film 3A.

Consequently, even when the double-sided adhesive tape 1 has the non-planar shape, it is possible to easily expose the surface (the first adhesive agent layer 5A) of the adhesive member 2 which is affixed to the installation target 20 in the operation of affixing the adhesive member 2 to the installation target 20. Therefore, it is possible to facilitate the operation of affixing the adhesive member 2 to the installation target 20.

As shown in Figs. 2A to 2C, the separation film 3 is a resin film made of a thermoplastic polymer. Therefore, when the double-sided adhesive tape 1 (processing sheet 9) is heated, separation film 3 is softened, with the result that double-sided adhesive tape 1 (processing sheet 9) is reliably deformed so as to have the non-planar shape. Thereafter, when the double-sided adhesive tape 1 (processing sheet 9) is cooled, the separation film 3 is hardened, with the result that the double-sided adhesive tape 1 reliably maintains the non-planar shape.

In other words, the double-sided adhesive tape 1 (processing sheet 9) is heated and cooled, and thus it is possible to simply and reliably form the double-sided adhesive tape 1.

As shown in Fig. 1B, the adhesive member 2 includes the support layer 4. Therefore, even when the double-sided adhesive tape 1 has the non-planar shape, the support layer 4 can reliably hold the pair of adhesive agent layers 5. Consequently, even when an external force acts on the adhesive member 2 in a state where the adhesive agent layer 5 of the adhesive member 2 is adhered to the installation target 20, the displacement of the adhesive agent layer 5 can be reduced.

In addition, as shown in Figs. 3A to 3C, the non-planar shape of the double-sided adhesive tape 1 conforms to the inner surface of the curved portion 22 of the installation target 20. Therefore, in the step of sticking the adhesive member 2 to the curved portion 22, the adhesive member 2 can be reliably stuck to the curved portion 22, with the result that it is possible to reliably reduce the occurrence of wrinkles in the adhesive member 2.

Then, the second separation film 3B is separated from the adhesive member 2 which is adhered to the curved portion 22, and thereafter the component 21 is affixed to the exposed adhesive member 2, with the result that it is possible to reliably join the installation target 20 and the component 21 together.

In addition, as shown in Figs. 2A to 2D, the processing sheet 9 is heated and pressurized and is thereby formed so as to have the non-planar shape, and is thereafter cooled while the pressurized state is maintained, with the result that it is possible to reliably maintain the non-planar shape of the processing sheet 9.

In other words, the processing sheet 9 is heated and cooled, and thus it is possible to reliably form the processing sheet 9. Thus, it is possible to reliably produce the double-sided adhesive tape 1 having the non-planar shape.

In addition, since the separation film 3 includes a thermoplastic polymer (preferably, is made of a thermoplastic polymer), as shown in Fig. 2B, the processing sheet 9 is heated to the softening temperature or more of the thermoplastic polymer, thus the separation film 3 is reliably softened and formed in the non-planar shape and the processing sheet 9 is cooled below the softening temperature of the thermoplastic polymer, with the result that the separation film 3 is reliably hardened to maintain the non-planar shape.

Therefore, it is possible to reliably form the processing sheet 9 so as to have the non-planar shape, with the result that it is possible to more reliably produce the double-sided adhesive tape 1 having the non-planar shape.

### 4. Second embodiment

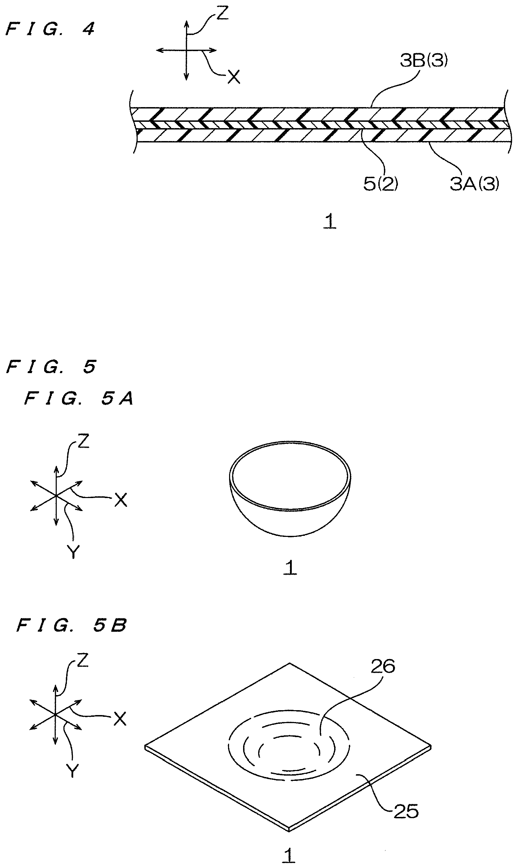

A second embodiment of the double-sided adhesive tape according to the present invention will then be described with reference to Fig. 4. In the second embodiment, the same members as in the first embodiment described above are identified with the same symbols, and their description will be omitted.

Although in the first embodiment, as shown in Fig. 1B, the adhesive member 2 includes the support layer 4 and the pair of adhesive agent layers 5, in the second embodiment, as shown in Fig. 4, the adhesive member 2 does not include the support layer 4 and is made only of one adhesive agent layer 5 (without a support member). In other words, in the double-sided adhesive tape 1 of the second embodiment, one adhesive agent layer 5 is sandwiched between the pair of separation films 3.

In the second embodiment, the thickness of the adhesive agent layer 5 is, for example, equal to or more than 1 µm, preferably equal to or more than 10 µm and more preferably equal to or more than 50 µm but is, for example, equal to or less than 3000 µm, preferably equal to or less than 500 µm and more preferably equal to or less than 100 µm.

The adhesive agent layer 5 described above may be constituted of a single layer or multiple layers (multilayer member).

In addition, the thickness of the separation film 3 is, for example, equal to or more than 50% and preferably equal to or more than 100% of the thickness of the adhesive agent layer 5 but is, for example, equal to or less than 1000% and preferably equal to or less than 500% thereof.

In addition, the thicknesses of the pair of separation films 3 (the first separation film 3A and the second separation film 3B) may be the same as each other or may differ from each other.

Although in the double-sided adhesive tape 1 described above, the separation force for separating the first separation film 3A from the lower surface (convex surface) of the adhesive agent layer 5 may be the same as the separation force for separating the second separation film 3B from the upper surface (convex surface) of the adhesive agent layer 5, they preferably differ from each other.

More specifically, the separation force for separating, from the convex surface of the adhesive agent layer 5, the first separation film 3A is lower than the separation force for separating the second separation film 3B from the concave surface of the adhesive agent layer 5.

It is to be noted that the separation force for separating the first separation film 3A from the adhesive agent layer 5 is the same as the separation force for separating the first separation film 3A described above from the first adhesive agent layer 5A, and the separation force for separating the second separation film 3B from the adhesive agent layer 5 is the same as the separation force for separating the second separation film 3B from the second adhesive agent layer 5B.

Examples of the above-described method for making the separation force of the first separation film 3A and the separation force of the second separation film 3B differ from each other include a method for forming a plurality of adhesive agent layers 5 (multilayer member) and respectively forming the layers with different adhesive agents, a method for respectively treating the inner surfaces of the first separation film 3A and the second separation film 3B in the thickness direction with different mold release agents, a method for making one separation film 3 (the first separation film 3A or the second separation film 3B) of a separation film in which mold release treatment is performed on a resin film and making the other separation film 3 of a polyolefin film in which mold release treatment is not performed and a method for using resin films having different thicknesses as the pair of separation films 3.

That is, the multiple layers of the adhesive agent layers 5 are respectively formed with different adhesive agents, and thus the respective adhesive forces of the layers can be made to differ from each other, with the result that the separation forces of the first separation film 3A and the second separation film 3B can be made to differ from each other.

In addition, even when the adhesive agent layer 5 is a single layer, mold release treatment is performed on the respective inner surfaces of the first separation film 3A and the second separation film 3B in the thickness direction such that they differ from each other, it is possible to make the respective separation forces of the first separation film 3A and the second separation film 3B differ from each other.

In order to produce such a double-sided adhesive tape 1, a processing sheet having the adhesive agent layer 5 and the pair of separation films 3 are prepared. In order to prepare the processing sheet, for example, the upper surface of the first separation film 3A is coated with the adhesive agent layer 5 by a known coating method (for example, coating with a known coater). Thereafter, the second separation film 3B is stuck to the upper surface of the adhesive agent layer 5. In this way, the processing sheet is prepared.

Then, as in the first embodiment described above, at least part of the processing sheet is heated and pressurized and is thereafter cooled, and then the double-sided adhesive tape 1 is cut out of the processing sheet.

Thus, the double-sided adhesive tape 1 according to the second embodiment is prepared.

In the second embodiment, since the adhesive member 2 is made only of the adhesive agent layer 5, it is possible to enhance the flexibility of the adhesive member 2, with the result that it is possible to reliably bring the adhesive member 2 and the curved portion 22 of the installation target 20 into close contact with each other.

### 5. Third embodiment and fourth embodiment

A third embodiment and a fourth embodiment of the double-sided adhesive tape of the present invention will then be described with reference to Figs. 5A and 5B. In the third embodiment and the fourth embodiment, the same members as in the first embodiment described above are identified with the same symbols, and their description will be omitted.

Although in the first embodiment, as shown in Fig. 1A, the entire double-sided adhesive tape 1 is formed in the non-planar shape so as to have the shape of a curve which is projected downward, the shape of the double-sided adhesive tape 1 is not particularly limited as long as at least part thereof has the non-planar shape.

For example, in the third embodiment, the double-sided adhesive tape 1 is formed in the shape of a bowl (cup) which is open upward.

In addition, in the fourth embodiment, the double-sided adhesive tape 1 includes, as an example of the non-planar shape, a non-planar portion 26 and a planar portion 25.

The non-planar portion 26 is arranged substantially in the center of the double-sided adhesive tape 1 in plan view and is formed in the shape of an arc which is recessed downward.

The planar portion 25 is a peripheral edge portion of the double-sided adhesive tape 1 and surrounds the non-planar portion 26 in plan view. The planar portion 25 is formed so as to conform to the XY plane and extends outward from the entire peripheral edge of the non-planar portion 26 in a radial direction.

### 6. Fifth embodiment

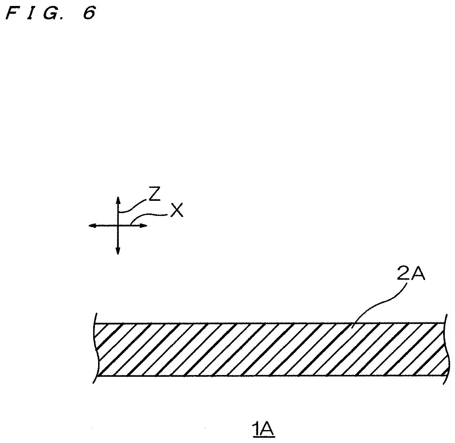

A fifth embodiment of the double-sided adhesive tape of the present invention will then be described with reference to Fig. 6.

Although in the first embodiment, as shown in Fig. 1B, the adhesive member 2 and the pair of separation films 3 are included, the adhesive member 2 includes the support layer 4 and the pair of adhesive agent layers 5 and the double-sided adhesive tape 1 is constituted of multiple layers, in the fifth embodiment, as shown in Fig. 6, the double-sided adhesive tape 1 is constituted of a single layer.

That is, a double-sided adhesive tape 1A according to the present embodiment is constituted only of an adhesive member 2A as shown in Fig. 6. The adhesive member 2A is formed by kneading a material having insulating property, a thermoplastic adhesive agent and an aramid-based thermoplastic resin.

In order to produce such a double-sided adhesive tape 1A, a processing sheet having the adhesive member 2A is first prepared.

Then, as in the first embodiment described above, at least part of the processing sheet is heated and pressurized and is thereafter cooled, and then the double-sided adhesive tape 1A is cut out of the processing sheet. Thus, the double-sided adhesive tape 1A according to the present embodiment is prepared. Since in order to form the double-sided adhesive tape 1A to have the non-planar shape, it is necessary to soften the double-sided adhesive tape 1A by heating so as to have a desired shape and to thereafter maintain such a state by cooling, a condition is present in which the ranges of the softening temperatures of the thermoplastic adhesive agent and the aramid-based thermoplastic resin or the ranges of the melting start temperatures thereof overlap each other.

Incidentally, the double-sided adhesive tape 1A described above is used as insulating paper, and is mainly used in an adherend such as an AC/DC converter, a DC/DC converter, an inverter or a charger. Therefore, since in order to use the double-sided adhesive tape 1A in such a portion, it is necessary to have a heat resistance temperature, a withstand voltage and tracking resistance performance, the double-sided adhesive tape 1A is preferably constituted of a member which has the performance described above. In this way, the double-sided adhesive tape 1A can be used in an adherend which is required to have insulating performance and can therefore be designed regardless of a conventional design method for separating members required to have an insulating property to provide insulation (space insulation), with the result that it is possible to further reduce the size of the adherend.

Since as insulating paper, it suffices to include a material having insulating property, regardless of the present embodiment, the double-sided adhesive tape 1 according to the first, third or fourth embodiment can also be used. That is, when insulating paper is used in the support layer 4, the double-sided adhesive tape 1 can be used as insulating paper. Although in the present embodiment, the material having insulating property is kneaded within the adhesive member 2A, if it is not used as insulating paper, the material having insulating property does not need to be kneaded.

### 7. Variations

Although in the first to fourth embodiments described above, as shown in Figs. 2A to 2D, the processing sheet 9 having the adhesive member 2 and the pair of separation films 3 is prepared, thereafter part of the processing sheet 9 is formed with the forming device 10 so as to have the non-planar shape and thus the double-sided adhesive tape 1 is produced, the method for producing the double-sided adhesive tape 1 is not limited to this method.

For example, the pair of separation films 3 are individually formed with the forming device 10 so as to have the non-planar shape, thereafter the adhesive member 2 prepared separately is sandwiched between the separation films 3 and thus the double-sided adhesive tape 1 can be produced.

However, in such a producing method, the adhesive member 2 needs to be sandwiched between the pair of separation films 3 each having the non-planar shape, and thus the producing operation is complicated. In addition, since the pair of separation films 3 are individually formed, a dimensional error may occur in the non-planar shape portion of each of the separation films 3. Therefore, as in the first to fourth embodiments described above, the adhesive member 2 and the pair of separation films 3 (processing sheet 9) are collectively formed so as to have the non-planar shape in terms of the efficiency of the operation and the dimensional error.

It is to be noted that each of the first to fifth embodiments and the variations can be combined as appropriate.

The double-sided adhesive tapes 1 and 1A described above are used in the joining of structural members and the like in various types of industrial products, and are more specifically and preferably used in the joining of electrical and electronic components, automobile interior components, automobile exterior components, residential interior components.

### Reference Signs List

- 1, 1A: double-sided adhesive tape
- 2, 2A: adhesive member
- 4: support layer
- 5: adhesive agent layer
- 9: processing sheet
- 20: installation target
- 21: component
- 22: curved portion
- 26: non-planar portion

## Claims

1. A double-sided adhesive sheet (1A) including:
a double-sided adhesive sheet (1A) **characterized in that** it comprises an adhesive member (2A) which is kneaded with at least an adhesive agent,
the double-sided adhesive sheet (1A) being formed so as to have a previously formed non-planar shape in the shape of a curve which is projected or recessed in a vertical up/down direction.

2. A double-sided adhesive sheet (1) including:
a double-sided adhesive sheet **characterized in that** it comprises an adhesive member (2) which is formed in a shape of a film and whose both surfaces in a thickness direction have an adhesive force; and
a pair of separation films (3) which are arranged so as to sandwich the adhesive member (2) in the thickness direction,
**characterized in that** the double-sided adhesive sheet (1) being formed so as to have a previously formed non-planar shape in the shape of a curve which is projected or recessed in a vertical up/down direction.

3. The double-sided adhesive sheet according to claim 2,
**characterized in that** a separation force for separating, from the adhesive member (2), a separation film (3A) which is arranged on one surface of the adhesive member (2) in the thickness direction differs from a separation force for separating, from the adhesive member (2), a separation film (3B) which is arranged on the other surface of the adhesive member (2) in the thickness direction.

4. The double-sided adhesive sheet according to claim 3,
**characterized in that** each of the pair of separation films (3) contains a thermoplastic polymer.

5. The double-sided adhesive sheet according to claim 2,
**characterized in that** the adhesive member (2) comprises:
a base member (4) which is formed in a shape of a film; and
a pair of adhesive agent layers (5) which are arranged so as to sandwich the base member (4) in the thickness direction.

6. The double-sided adhesive sheet according to claim 2,
**characterized in that** the adhesive member (2) is made only of an adhesive agent layer (5) which is formed in a shape of a film.

7. A joining method using a double-sided adhesive sheet (1),
**characterized in that** the joining method comprises:
a step of preparing a first adherend (20) which has a non-planar shape (22);
a step of preparing the double-sided adhesive sheet (1) according to claim 2, the non-planar shape of the double-sided adhesive sheet (1) conforming to the non-planar shape (22) of the first adherend (20);
a step of separating one separation film (3A) of the pair of separation films (3) from the adhesive member (2) and sticking the exposed adhesive member (2) to the non-planar shape (22) of the first adherend (20); and
a step of separating the other separation film (3B) of the pair of separation films (3) from the adhesive member (2) and affixing a second adherend (21) to the exposed adhesive member (2).

8. A method for producing a double-sided adhesive sheet (1),
**characterized in that** the method comprises:
a step of preparing a processing sheet (9) that includes: an adhesive member (2) which is formed in a shape of a film and whose both surfaces in a thickness direction have an adhesive force; and a pair of separation films (3) which are arranged so as to sandwich the adhesive member (2) in the thickness direction;
a step of forming a non-planar shape (9a) by heating and pressurizing at least part of the processing sheet (9); and
a step of cooling the processing sheet (9) having the non-planar shape (9a) while maintaining a pressurized state.

9. The method for producing a double-sided adhesive sheet according to claim 8,
**characterized in that** each of the pair of separation films (3) contains a thermoplastic polymer,
in the step of heating and pressurizing the processing sheet (9), the processing sheet (9) is heated to a softening temperature or more of the thermoplastic polymer and
in the step of cooling the processing sheet (9) while maintaining the pressurized state, the processing sheet (9) is cooled below the softening temperature of the thermoplastic polymer.

## Patentansprüche

1. Doppelseitige Klebefolie (1A), beinhaltend:
eine doppelseitige Klebefolie (1A), **dadurch gekennzeichnet, dass** sie ein Klebeelement (2A) umfasst, das mit mindestens einem Klebemittel verknetet ist,
wobei die doppelseitige Klebefolie (1A) so gebildet ist, dass sie eine zuvor gebildete nichtplanare Form in Form einer Kurve aufweist, die in einer vertikalen Aufwärts-/Abwärtsrichtung vorstehend oder vertieft ist.

2. Doppelseitige Klebefolie (1), beinhaltend:
eine doppelseitige Klebefolie, **dadurch gekennzeichnet, dass** sie ein Klebeelement (2) umfasst, das in Form eines Films gebildet ist und dessen beide Oberflächen in einer Dickenrichtung eine Klebekraft aufweisen; und
ein Paar Trennfilme (3), die so angeordnet sind, dass sie das Klebeelement (2) in der Dickenrichtung einklemmen,
**dadurch gekennzeichnet, dass** die doppelseitige Klebefolie (1) so gebildet ist, dass sie eine zuvor gebildete nichtplanare Form in Form einer Kurve aufweist, die in einer vertikalen Aufwärts-/Abwärtsrichtung vorstehend oder vertieft ist.

3. Doppelseitige Klebefolie nach Anspruch 2,
**dadurch gekennzeichnet, dass** eine Trennkraft zum Abtrennen, von dem Klebeelement (2), eines Trennfilms (3A) der auf einer Oberfläche des Klebeelements (2) in der Dickenrichtung angeordnet ist, von einer Trennkraft zum Abtrennen eines Trennfilms (3B) von dem Klebeelement (2), der auf der anderen Oberfläche des Klebeelements (2) in der Dickenrichtung angeordnet ist, verschieden ist.

4. Doppelseitige Klebefolie nach Anspruch 3,
**dadurch gekennzeichnet, dass** jede des Paares von Trennfilmen (3) ein thermoplastisches Polymer enthält.

5. Doppelseitige Klebefolie nach Anspruch 2,
**dadurch gekennzeichnet, dass** das Klebeelement (2) Folgendes umfasst:
ein Basiselement (4), das in Form eines Films gebildet ist; und
ein Paar Klebemittelschichten (5), die so angeordnet sind, dass sie das Basiselement (4) in der Dickenrichtung einklemmen.

6. Doppelseitige Klebefolie nach Anspruch 2,
**dadurch gekennzeichnet, dass** das Klebeelement (2) nur aus einer Klebemittelschicht (5), die in Form eines Films gebildet ist, hergestellt ist.

7. Fügeverfahren unter Verwendung einer doppelseitigen Klebefolie (1),
**dadurch gekennzeichnet, dass** das Fügeverfahren Folgendes umfasst:
einen Schritt des Erzeugens einer ersten Klebefläche (20), die eine nichtplanare Form (22) aufweist;
einen Schritt des Erzeugens der doppelseitigen Klebefolie (1) nach Anspruch 2, wobei die nichtplanare Form der doppelseitigen Klebefolie (1) mit der nichtplanaren Form (22) der ersten Klebefläche (20) übereinstimmt;
einen Schritt des Abtrennens eines Trennfilms (3A) des Paares von Trennfilmen (3) von dem Klebeelement (2) und des Anheftens des freiliegenden Klebeelements (2) an die nichtplanare Form (22) der ersten Klebefläche (20);
und
einen Schritt des Abtrennens des anderen Trennfilms (3B) des Paares von Trennfilmen (3) von dem Klebeelement (2) und des Anbringens einer zweiten Klebefläche (21) an dem freiliegenden Klebeelement (2).

8. Verfahren zum Produzieren einer doppelseitigen Klebefolie (1)
**dadurch gekennzeichnet, dass** das Verfahren Folgendes umfasst:
einen Schritt des Erzeugens einer Verarbeitungsfolie (9), die Folgendes beinhaltet: ein Klebeelement (2), das in Form eines Films gebildet ist und dessen beide Oberflächen in einer Dickenrichtung eine Klebekraft aufweisen; und ein Paar Trennfilme (3), die so angeordnet sind, dass sie das Klebeelement (2) in der Dickenrichtung einklemmen;
einen Schritt des Bildens einer nichtplanaren Form (9a) durch Erwärmen und Druckbeaufschlagen mindestens eines Teils der Verarbeitungsfolie (9); und
einen Schritt des Abkühlens der Verarbeitungsfolie (9), die die nichtplanare Form (9a) aufweist, bei gleichzeitigem Aufrechterhalten eines druckbeaufschlagten Zustands.

9. Verfahren zum Produzieren einer doppelseitigen Klebefolie nach Anspruch 8,
**dadurch gekennzeichnet, dass** jede des Paares von Trennfilmen (3) ein thermoplastisches Polymer enthält,
in dem Schritt des Erwärmens und Druckbeaufschlagens der Verarbeitungsfolie (9) die Verarbeitungsfolie (9) auf eine Erweichungstemperatur oder mehr des thermoplastischen Polymers erwärmt wird und
in dem Schritt des Abkühlens der Verarbeitungsfolie (9) bei gleichzeitigem Aufrechterhalten des druckbeaufschlagten Zustands die Verarbeitungsfolie (9) unter die Erweichungstemperatur des thermoplastischen Polymers abgekühlt wird.

## Revendications

1. Feuille adhésive double face (1A) incluant :
une feuille adhésive double face (1A) **caractérisée en ce qu'**elle comprend un élément adhésif (2A) qui est malaxé avec au moins un agent adhésif,
la feuille adhésive double face (1A) étant formée de manière à avoir une forme non plane préalablement formée sous la forme d'une courbe qui fait saillie ou qui est en creux dans une direction haut/bas verticale

2. Feuille adhésive double face (1) incluant :
une feuille adhésive double face **caractérisée en ce qu'**elle comprend un élément adhésif (2) qui est formé sous la forme d'un film et dont les deux surfaces dans une direction d'épaisseur présentent une force d'adhérence ; et
une paire de films de séparation (3) qui sont agencés de manière à prendre en sandwich l'élément adhésif (2) dans la direction d'épaisseur,
**caractérisée** en ce la feuille adhésive double face (1) est formée de manière à avoir une forme non plane préalablement formée sous la forme d'une courbe qui fait saillie ou qui est en creux dans une direction haut/bas verticale.

3. Feuille adhésive double face selon la revendication 2,
**caractérisée en ce qu'**une force de séparation pour séparer, à partir de l'élément adhésif (2), un film de séparation (3A) qui est agencé sur une surface de l'élément adhésif (2) dans la direction d'épaisseur diffère d'une force de séparation pour séparer, à partir de l'élément adhésif (2), un film de séparation (3B) qui est agencé sur l'autre surface de l'élément adhésif (2) dans la direction d'épaisseur.

4. Feuille adhésive double face selon la revendication 3,
**caractérisée en ce que** chacun de la paire de films de séparation (3) contient un polymère thermoplastique.

5. Feuille adhésive double face selon la revendication 2,
**caractérisée en ce que** l'élément adhésif (2) comprend :
un élément de base (4) qui est formé sous la forme d'un film ; et
une paire de couches d'agent adhésif (5) qui sont agencées de manière à prendre en sandwich l'élément de base (4) dans la direction d'épaisseur.

6. Feuille adhésive double face selon la revendication 2,
**caractérisée en ce que** l'élément adhésif (2) est fait uniquement d'une couche d'agent adhésif (5) qui est formée sous la forme d'un film.

7. Procédé d'assemblage utilisant une feuille adhésive double face (1),
**caractérisé en ce que** le procédé d'assemblage comprend :
une étape de préparation d'un premier adhérent (20) qui présente une forme non plane (22) ;
une étape de préparation de la feuille adhésive double face (1) selon la revendication 2, la forme non plane de la feuille adhésive double face (1) se conformant à la forme non plane (22) du premier adhérent (20) ;
une étape de séparation d'un film de séparation (3A) de la paire de films de séparation (3) à partir de l'élément adhésif (2) et de collage de l'élément adhésif (2) exposé à la forme non plane (22) du premier adhérent (20) ; et
une étape de séparation de l'autre film de séparation (3B) de la paire de films de séparation (3) à partir de l'élément adhésif (2) et de fixation d'un second adhérent (21) à l'élément adhésif (2) exposé.

8. Procédé de production d'une feuille adhésive double face (1),
**caractérisé en ce que** le procédé comprend :
une étape de préparation d'une feuille de traitement (9) qui inclut : un élément adhésif (2) qui est formé sous la forme d'un film et dont les deux surfaces dans une direction d'épaisseur présentent une force d'adhérence; et une paire de films de séparation (3) qui sont agencés de manière à prendre en sandwich l'élément adhésif (2) dans la direction d'épaisseur ;
une étape de formation d'une forme non plane (9a) en chauffant et en mettant sous pression au moins une partie de la feuille de traitement (9) ; et
une étape de refroidissement de la feuille de traitement (9) présentant la forme non plane (9a) tout en maintenant un état de pression.

9. Procédé de production d'une feuille adhésive double face selon la revendication 8,
**caractérisé en ce que** chacun de la paire de films de séparation (3) contient un polymère thermoplastique,
dans l'étape de chauffage et de mise sous pression de la feuille de traitement (9), la feuille de traitement (9) est chauffée à une température de ramollissement ou plus du polymère thermoplastique et
dans l'étape de refroidissement de la feuille de traitement (9) tout en maintenant l'état de pression, la feuille de traitement (9) est refroidie en dessous de la température de ramollissement du polymère thermoplastique.
